# EUROPEAN PATENT SPECIFICATION

(11) **EP 1 311 052 B1**
(45) Date of publication and mention of the grant of the patent: **14.06.2006**
(21) Application number: 02024740.9
(22) Date of filing: 06.11.2002
(51) Int. Cl.: H01R 43/24

(54) **Manufacturing method of electrical part with connector housing**
Herstellungsverfahren von elektrischem Teil mit Verbindungsgehäuse
Procédé de fabrication de pièce électrique avec boîte de connection

(30) Priority: 07.11.2001 JP 2001342116
(43) Date of publication of application: 14.05.2003
(73) Proprietor: ALPS ELECTRIC CO., LTD., Tokyo 145-8501 (JP)
(72) Inventor: Ishihara, Kanji, Otsuka-cho, Ota-ku, Tokyo 145-8501 (JP)
(74) Representative: Klunker . Schmitt-Nilson . Hirsch

(56) References cited:
- EP-A- 1 133 012
- US-A- 5 583 287
- US-B1- 6 294 851

## Description

### BACKGROUND OF THE INVENTION

### 1. Field of the Invention

The present invention relates to an electrical part according to the preamble of claim 1, and more particularly to an electrical part permitting hoop molding. The invention also relates to a manufacturing method for manufacturing such electrical part

### 2. Description of the Prior Art

To describe an electrical part according to the prior art (see document US-A-6 034 590), Fig. 19 shows a cross section of the essential area of the electrical part according to the prior art.

An electrical part casing 51 has an insulating resin-made cylindrically-shaped accommodating recess 51d, a cylinder 51a on a side, an aperture 51b and a hole 51c opposite the aperture 51b.

A lid 52 is insulating resin-made and disk-shaped, blocks the aperture 51b of the electrical part casing 51, and has a projection 52a.

A drive shaft 53 is insulating resin-made and rod-shaped with a round cross section. The drive shaft 53 is slidably pressed through the hole 51c in the electrical part casing, and its tip protrudes from the electrical part casing 51. The tip of the drive shaft 53 is engaged with an external detection shaft (not shown).

A movable portion 54, which is an insulating resin-made member, contains a brush 54a. The movable portion 54 is in contact with the drive shaft 53, and is movable according to the moving direction of the drive shaft.

A coil spring 58 is formed of a spring member in a coil shape. One of its ends is snapped onto the projection 52a of the lid 52, while the other is in contact with the movable portion 54. The movable portion 54 is pressed away from the lid 52 to give a spring force to the drive shaft 53 so as to cause it to protrude out of the hole 51c in the electrical part casing 51.

A fixed portion 55 is a resistance substrate 55a, on whose surface the brush 54a of the movable portion 54 slides. The fixed portion 55 is held without play by a leaf spring 55b.

A terminal 56 is insert-molded into the electrical part casing 51. One of its ends is exposed within the accommodating recess 51d of the electrical part casing 51, while the other is exposed within the cylinder 51a of the electrical part casing 51 to constitute a connector.

A connection terminal 57 electrically connects the terminal 56 to an electrode (not shown) of the resistance substrate 55a.

Next will be described a manufacturing method for the electrical part according to the prior art.

First, terminals 56 are fitted one by one onto a molding die to mold an electrical part casing 51. One end of each terminal 56 is positioned in the accommodating recess 51d of the electrical part casing 51, while the other end is positioned in the cylinder 51a. In this manner, electrical part casings 51 are manufactured one by one. Next, the resistance substrate 55a is fixed with the leaf spring 55b. Then, the drive shaft 53, in a state in which it is linked to the movable portion 54, is pressed into the hole 51c and the brush 54a is fitted slidingly onto the resistance substrate 55a. Next, the resistance substrate 55a and the terminal 56 are electrically connected by the connection terminal 57. Then, the coil spring 58 is fitted in contact with the movable portion 54. Next, the coil spring 58 is snapped onto the projection 52a of the lid 52 to seal the lid 52.

In the conventional electrical part and the manufacturing method therefor described above, one end of the terminal 56 is exposed in the accommodating recess 51d in the electrical part casing 51, while the other end is exposed within the cylinder 51a. In such a structure wherein both ends are exposed within the recess, it is extremely difficult to produce the terminals in a hoop form or to produce them by use of a terminal unit in which a plurality of terminals are continuous in the widthwise direction on account of the impossibility to secure a space for cutting the terminals in or it is intrinsically extremely difficult to cut the terminals without allowing them to protruding from the accommodating recess 51d or the aperture 51b. As a consequence, the terminals have to be fitted one by one onto the molding die and electrical part casings molded one by one, resulting in a seriously cumbersome manufacturing process. Furthermore, there are many different requirements regarding the shapes of the electrical part casing 51 and of the connector, making it necessary to prepare a different molding die for each product item.

### SUMMARY OF THE INVENTION

An object of the present invention is to provide an electrical part permitting the terminals to be formed in a hoop shape or their manufacturing using a terminal unit in which a plurality of terminals are continuous in a widthwise direction, resulting in efficient manufacturing, and a manufacturing method therefor.

An electrical part according to the invention has the features of claim 1.

Since the electrical part terminals and the connector terminals are exposed in this configuration, an efficient manufacturing method can be adopted such as hoop molding by use of these exposed portions or use of terminal units in each of which a plurality of terminals are continuous in a widthwise direction. It is also made possible to easily produce the connector housing or the connector terminal as demanded. Preferred embodiments are defined by the dependent claims.

Further a covering to cover a connecting portion between the one end of the electrical part terminals and the one end of the connector terminals is provided.

This configuration makes it possible to mechanically protect and electrically insulate the connecting portion with the covering.

Also, a fitting member is held by at least one of the electrical part casing and the connector housing, and a portion of the fitting member is used as the covering.

As the fitting member constitutes the covering, the covering can be easily formed. It is further made possible to produce the covering as demanded.

A power feed terminal is held by the connector housing, and an exposed portion of the power feed terminal is partly held by the fitting member.

Since this configuration makes it possible to hold the power feed terminal at the same time with the molding of the fitting member, the holding of the power feed terminal is facilitated.

An electrical part according to the invention may as well be provided with an electrical part casing whose inside is blocked; electrical part terminals of which one end is exposed on an outer surface of the electrical part casing and insert-molded into the electrical part casing; a drive shaft of which one end protrudes outwards and another end is positioned in the electrical part casing; a detecting unit housed in the electrical part casing and issuing a signal according to a quantity of action of the drive shaft; and a connector housing formed separately from the electrical part casing, wherein the one end of the electrical part terminals is extended in a state of being exposed into the connector housing, which is opposite thereto, penetrates the connector housing and is positioned in a recess of the connector housing to be insert-molded to serve as connector terminals.

This configuration permits the adoption of an efficient manufacturing method such as hoop molding by use of these exposed portions of the electrical part terminals and the connector terminals or use of terminal units in each of which a plurality of terminals are continuous in a widthwise direction. It is also made possible to easily produce the connector housing or the connector terminals as demanded.

An electrical part manufacturing method according to the invention includes the steps of claim 6.

Since this method permits a manufacturing process by which a hoop or a terminal unit is used to mold a plurality of terminals at the same time, electrical parts can be efficiently manufactured thereby. It is also made possible to easily produce the connector housing or the connector terminals as demanded.

### BRIEF DESCRIPTION OF THE DRAWINGS

Fig. 1 shows a cross section of the essential area of an electrical part, which is a first preferred embodiment of the present invention.
Fig. 2 shows a plan of the electrical part, which is the first preferred embodiment of the invention.
Fig. 3 shows a plan of an electrical part, which is a second preferred embodiment of the invention.
Fig. 4 shows a front view of the electrical part, which is the second preferred embodiment of the invention.
Fig. 5 shows a profile of the electrical part, which is the second preferred embodiment of the invention.
Fig. 6 shows a plan of a fitting member for the electrical part, which is the second preferred embodiment of the invention.
Fig. 7 is a cross section along line 7-7 in Fig. 6.
Fig. 8 shows a cross section of the essential area of an electrical part, which is a third preferred embodiment of the invention.
Fig. 9 shows a plan of the electrical part, which is the third preferred embodiment of the invention.
Fig. 10 illustrates the hoop formation step, on the electrical part casing side, of a manufacturing process for the electrical part, which is the first preferred embodiment of the invention.
Fig. 11 illustrates the hoop formation step, on the connector side, of the manufacturing process for the electrical part, which is the first preferred embodiment of the invention.
Fig. 12 illustrates the hoop formation step of the manufacturing process for the electrical part, which is the third preferred embodiment of the invention.
Fig. 13 shows a plan of the step before formation in a modified version of the manufacturing process for the electrical part, which is the first preferred embodiment of the invention.
Fig. 14 shows a front view of the step before formation in the modified version of the manufacturing process for the electrical part, which is the first preferred embodiment of the invention.
Fig. 15 shows a profile of the step before formation in the modified version of the manufacturing process for the electrical part, which is the first preferred embodiment of the invention.
Fig. 16 shows a plan of the step after formation in the modified version of the manufacturing process for the electrical part, which is the first preferred embodiment of the invention.
Fig. 17 shows a front view of the step after formation in the modified version of the manufacturing process for the electrical part, which is the first preferred embodiment of the invention.
Fig. 18 shows a profile of the step after formation in the modified version of the manufacturing process for the electrical part, which is the first preferred embodiment of the invention.

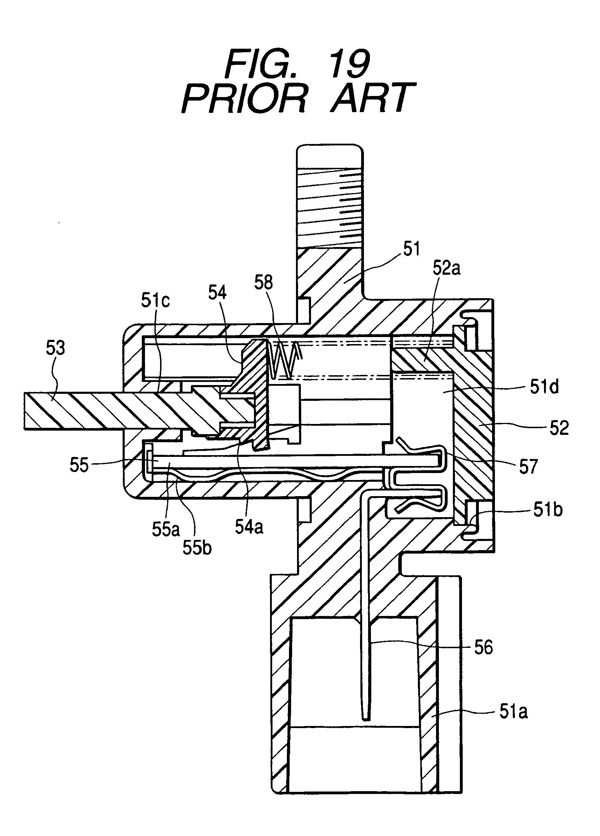

Fig. 19 shows a cross section of the essential area of an electrical part according to the prior art.

### DESCRIPTION OF THE PREFERRED EMBODIMENTS

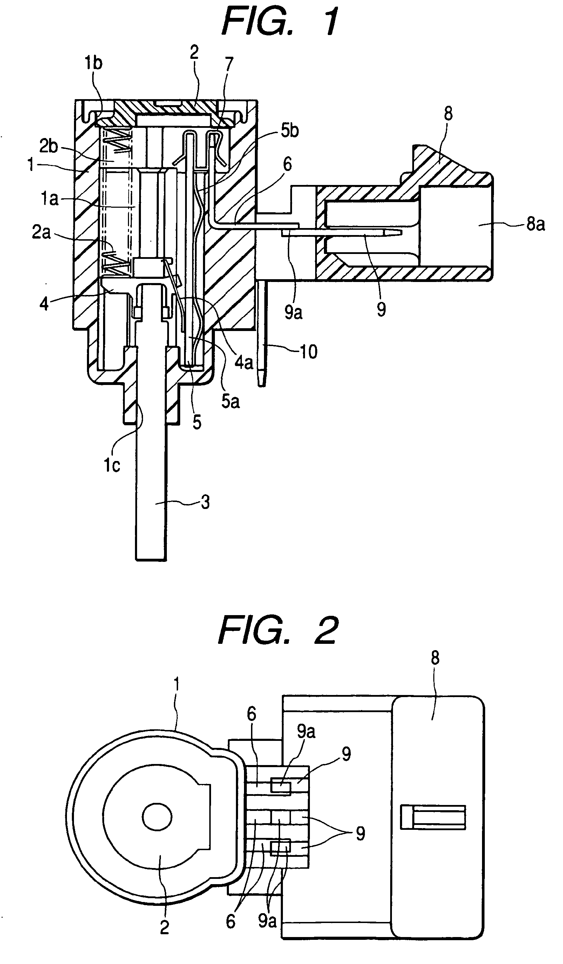

Of the drawings illustrating the electrical part, which is the first preferred embodiment of the invention, Fig. 1 shows a cross section of its essential area, and Fig. 2, a plan of the same.

An electrical part casing 1 has a cylindrically-shaped accommodating recess 1a, made of insulating resin such as polyphenylene sulfide (PPS), an aperture 1b and a hole 1c opposite the aperture 1b.

A lid 2 is insulating resin-made and disk-shaped, blocks the aperture 1b of the electrical part casing 1, and has a projection 2b.

A drive shaft 3 is insulating resin-made and rod-shaped with a round cross section. The drive shaft 3 is slidably pressed through the hole 1c in the electrical part casing 1, and its tip protrudes from the electrical part casing 1. The tip of the drive shaft 3 is engaged with an external detection shaft (not shown).

A movable portion 4, which is an insulating resin-made member, contains a brush 4a. The movable portion 4 is in contact with the drive shaft 3, and is movable according to the moving direction of the drive shaft.

A coil spring 2a is formed of a spring member in a coil shape. One of its ends is snapped onto the projection 2b of the lid 2, while the other is in contact with the movable portion 4. The movable portion 4 is pressed away from the lid 2 to give a spring force to the drive shaft 3 so as to cause it to protrude out of the hole 1c in the electrical part casing 1.

A fixed portion 5 is a resistance substrate 5a, and because the movable portion 4 detects the quantity of action of the movable portion 4 on the fixed portion 5 as a brush 4a slides on the surface of the resistance substrate 5a, the fixed portion 5 and the movable portion 4 together constitute a detecting unit. The fixed portion 5 is held without play by a leaf spring 5b.

A terminal 6 is insert-molded into the electrical part casing 1. One of its ends is exposed within the accommodating recess 1a of the electrical part casing 1, while the other is housed without protruding outside the recess 1a. The latter end is bent at a right angle on the midway, and is exposed outside the electrical part casing 1.

A connection terminal 7 electrically connects the terminal 6 to an electrode (not shown) of the resistance substrate 5a.

A connector housing 8 is made of the same kind of insulating resin such as PPS as the electrical part casing 1 is, and has a recess 8a. The connector housing 8 is provided opposite the electrical part casing 1 with a space between them.

One end of a second terminal 9 is so arranged within the recess 8a of the connector housing 8 as not to protrude out of this recess 8a, and the other end is exposed out of the connector housing 8 and connected to the portion of the terminal 6 exposed out of the electrical part casing 1.

A power feed terminal 10, which is a terminal for feeding power to an external solenoid, is arranged side by side with the second terminal 9 within the connector housing 8, and is bent on the midway to be exposed downwards out of the connector housing.

The electrical part, which is the first preferred embodiment of the invention, is configured as described above.

Incidentally, although a connecting portion 9a between the terminal 6 and the second terminal 9 is exposed in the first preferred embodiment described above, there may as well be provided a covering portion, made up of an adhesive or the like, for the connecting portion 9a.

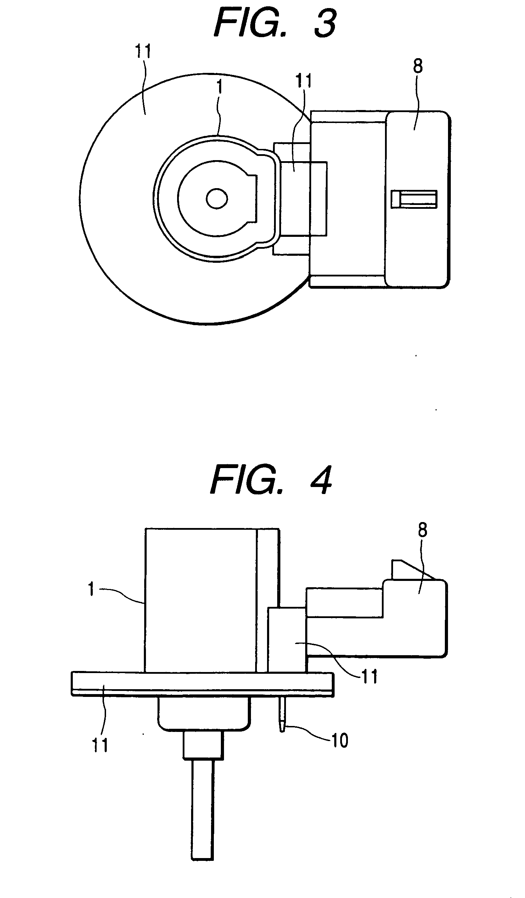

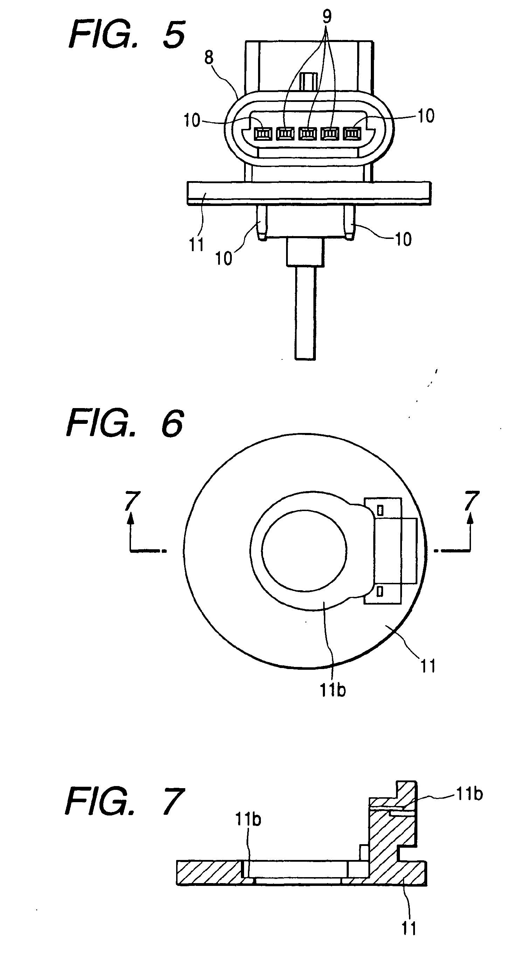

Next, of the drawings illustrating the electrical part, which is the second preferred embodiment of the invention, Fig. 3 shows a plan of the electrical part; Fig. 4, a front view of the same; Fig. 5, a profile of the same; Fig. 6, a plan of a fitting member for the electrical part; and Fig. 7, a cross section along line 7-7 in Fig. 6.

The second embodiment of the invention derives from the above-described electrical part, which is the first embodiment, and the connector housing and the portion for fitting to its counterpart are molded integrally. Therefore, the same elements as in the first embodiment will be denoted by respectively the same reference numerals, and their description dispensed with.

A fitting portion 11 is made of the same kind of insulating resin such as PPS as the electrical part casing 1 is, and is formed in a substantial disk shape by resin molding. It is held on a side of the electrical part casing 1 from the bottom of the casing in Fig. 4, and is also positioned on a side of the connector housing 8. The connecting portion 9a between the terminal 6 and the second terminal 9 is embedded in the resin of the fitting portion 11, and the insulating resin around the connecting portion 9a constitutes a covering 11a for the connecting portion 9a. In this case, therefore, the covering 11a is formed of the fitting portion 11. Whereas the power feed terminal 10 is arranged side by side with the two ends of the second terminal 9 within the connector housing 8 and is bent on the midway to be exposed downwards out of the connector housing 8, that middle part is embedded in the resin of the fitting portion 11 and fixed by the fitting portion 11.

The second preferred embodiment of the invention is configured as described above.

Incidentally, Fig. 6 and Fig. 7 are drawings which show only the shape of the fitting portion 11, but this portion does not exist by itself.

In the second embodiment of the invention described above, the fitting portion 11 is so formed as to be in only plane-to-plane contact with the connector housing 8 and accordingly the function of the connector housing 8 to hold the fitting portion 11 is weak. However, since they are made of the same material and the plane of the fitting portion 11 is formed as a result of the contact of the molten resin constituting the fitting portion 11 with the plane of the connector housing 8, the two faces are in tight contact with each other, and accordingly the fitting portion 11 is held by the connector housing 8 to some extent.

Further in the second embodiment described above, the fitting portion 11 is held by mainly covering the exposed terminals 6 and 9, the contact of a recess 11b with the electrical part casing 1 serves to position the direction of the rear end (upwards in Fig. 4) and the planar direction (toward the paper face in Fig. 3) of the drive shaft 3.

Also, in the second embodiment described above, it is also possible to have the fitting portion 11 held more securely by making uneven the surface of the electrical part casing 1 or the connector housing 8 in contact with the fitting portion 11.

Alternatively, although the electrical part casing 1, the connector housing 8 and the fitting portion 11 in the second embodiment described above are made of the same material and can stick to each other tightly, different materials can be selected as well for these elements. Also, though the fitting portion 11 is mainly held by the electrical part casing 1 and the exposed portions of the terminals 6 and 9, it can further be held by the connector housing 8 or by the electrical part casing 1 or the connector housing 8 in addition to the exposed portions of the terminals 6 and 9.

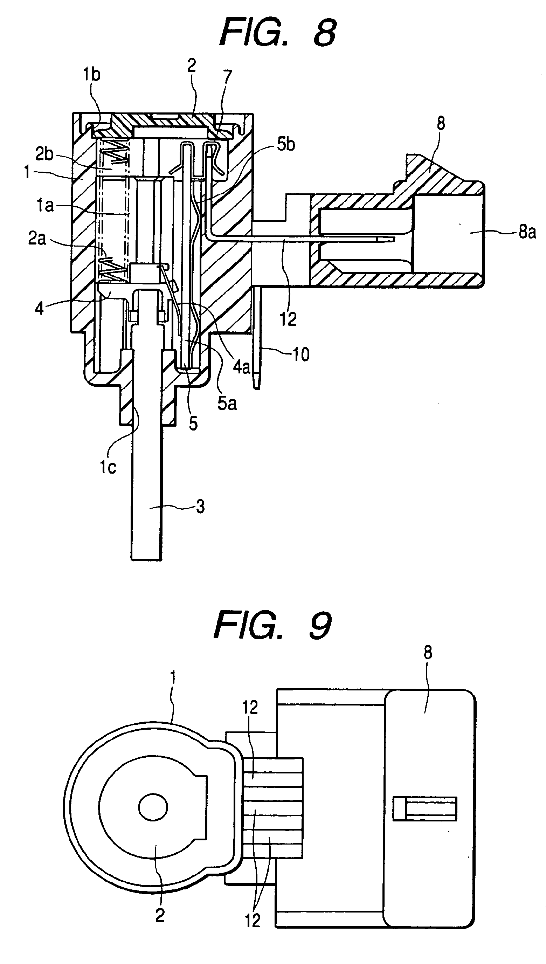

Next, of the drawings illustrating the electrical part, which is the third preferred embodiment of the invention, Fig. 8 shows a cross section of its essential area; and Fig. 9, a plan of the same.

The third embodiment differs from the first embodiment in that, while the first embodiment has the connecting portion 9a between the terminal 6 and the second terminal 9, the third embodiment has no connecting portion, but has an integrated third terminal 12. Since the two embodiments are the same in all other respects, the same elements as in the first embodiment will be denoted by respectively the same reference numerals, and their description dispensed with.

One end of the third terminal 12 is connected to an electrode (not shown) of the resistance substrate 5a by the connection terminal 7, bent as it is, without having a connecting portion, at a right angle on the midway and, after being exposed outside, penetrates the connector housing 8 to be exposed in the recess 8a. The contact resistance is smaller correspondingly to the absence of the connecting portion on the way.

The third preferred embodiment of the invention is configured as described above.

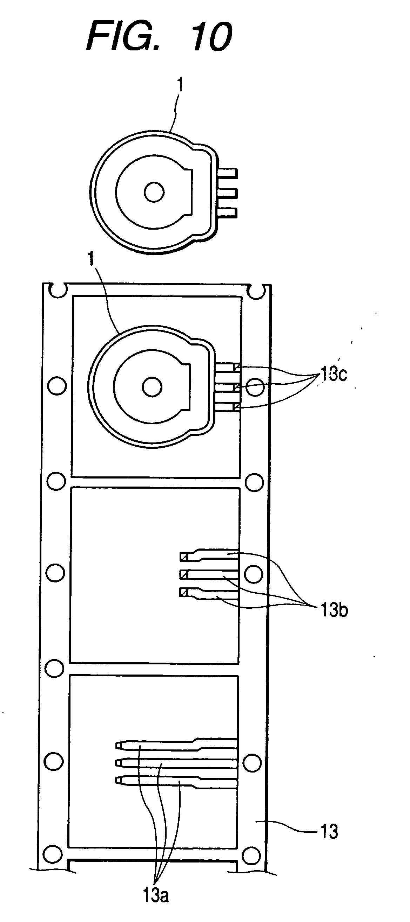

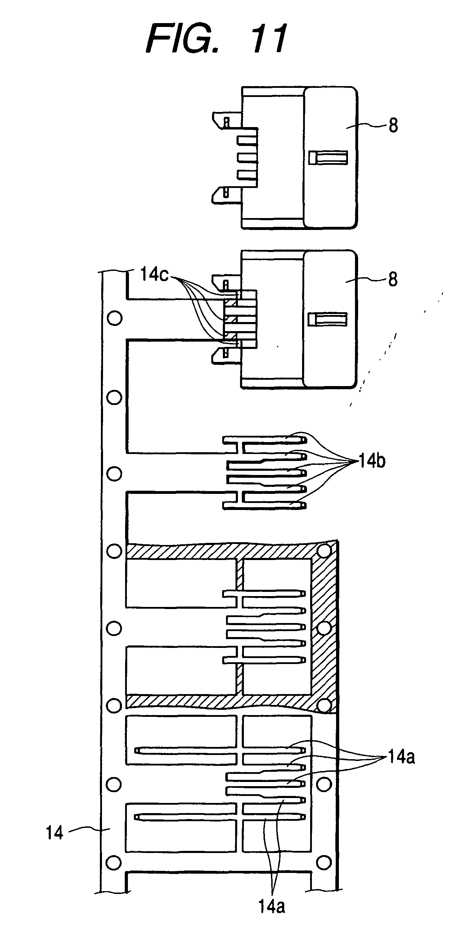

Next, of the drawings illustrating the manufacturing method for the electrical part, which is the first preferred embodiment of the invention, Fig. 10 illustrates its hoop molding step on the electrical part casing side the electrical part; and Fig. 11, its hoop molding step on the connector side of the electrical part.

As shown in Fig. 10, first from the frame of a hoop 13, terminals 13a protruding in one direction at a right angle to the lengthwise direction of the hoop 13 are worked out by routing. Then, the tips of the terminals 13a are folded in the direction normal to the paper face to form terminals 13b. After that, the terminals 13b are insert-molded so that the folded tips of the terminals 13b be exposed within the electrical part casing 1 and the roots of the terminals 13b be exposed outside, and ties 13c to the frame are cut off. As shown in Fig. 11, five consecutive terminals 14a are provided on a hoop 14 at a separate step; superfluous portions of the frame are cut off; both ends of the terminals 14a are folded in the direction normal to the paper face to form terminals 14b; the connector housing 8 is insert-molded so that the folded tips of the terminals 14b be exposed within the recess 8a of the connector housing 8, and ties 14c of the terminals are cut off. Then, the terminals 13b exposed out of the electrical part casing 1 and the terminals 14b exposed out of the connector housing 8 are connected by welding. Next, a leaf spring is fitted onto the electrical part casing 1, and the fixed portion 5 (resistance substrate 5a) is incorporated. The movable portion 4 (brush 4a) is linked to the drive shaft 3 to protrude the shaft 3 out of the hole 1c, and the movable portion 4 (brush 4a) is mounted. Then, the connection terminal 7 is fitted, the coil spring 2a and the lid 2 are incorporated. Finally, the lid 2 is blocked. This completes the manufacturing of the electrical part, which is the first embodiment of the present invention.

To add, although the electrical part is incorporated into the electrical part casing 1 after the welding of the terminals 13b of the electrical part casing 1 to the terminals 14b of the connector housing 8 according to the above-described manufacturing method for the electrical part, which is the first embodiment of the invention, the invention is not limited to this sequence and the terminals 13b of the electrical part casing 1 may as well be welded to the terminals 14b of the connector housing 8 after the electrical part has been incorporated into the electrical part casing 1.

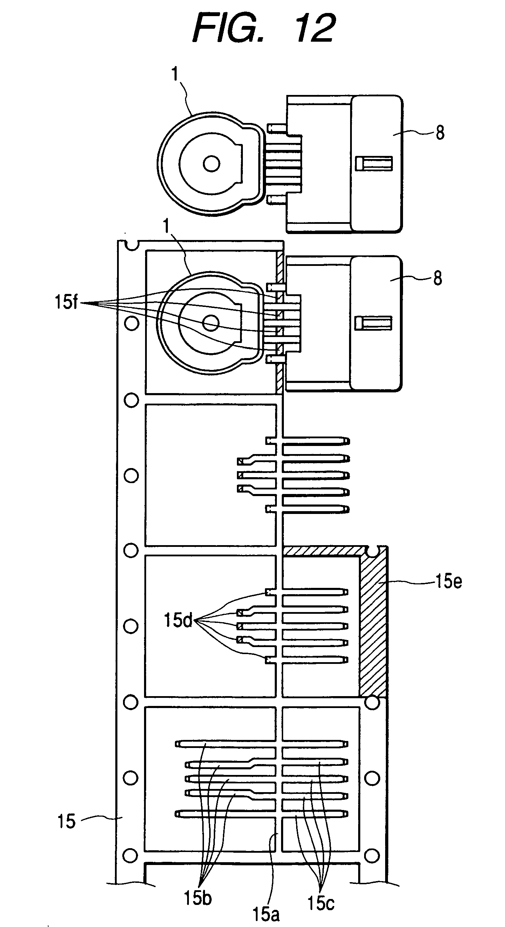

Next to explain the drawing illustrating the manufacturing method for the electrical part, which is the third preferred embodiment of the invention, Fig. 12 illustrates the hoop formation step of the manufacturing process for this electrical part.

First from an inner frame 15a of the hoop 15, terminals 15b on the electrical part casing 1, protruding in two directions at a right angle to the lengthwise direction of the hoop 15 and terminals 15c on the connector side, are worked out by routing. Then, the terminals 15b on the electrical part casing 1 are folded in the direction normal to the paper face to form terminals 15d on the electrical part casing 1, and unnecessary portions 15e of the frame are cut off. Next, the electrical part casing 1 and the connector housing 8 are formed by insert-molding onto the terminals 15d on the electrical part casing 1 side and the terminals 15c on the connector side, respectively, whichever may be done first, and ties 15f to the terminals are cut off. As the subsequent steps are the same as their respective counterparts in the above-described manufacturing method for the electrical part, which is the first embodiment of the invention, their description is dispensed with. This completes the manufacturing of the electrical part, which is the third embodiment of the present invention.

To add, though a hoop is used in both of the manufacturing methods described above, the invention is not limited to the use of a hoop, but a unit consisting of a few terminals linked continuously in the widthwise direction may be used as well.

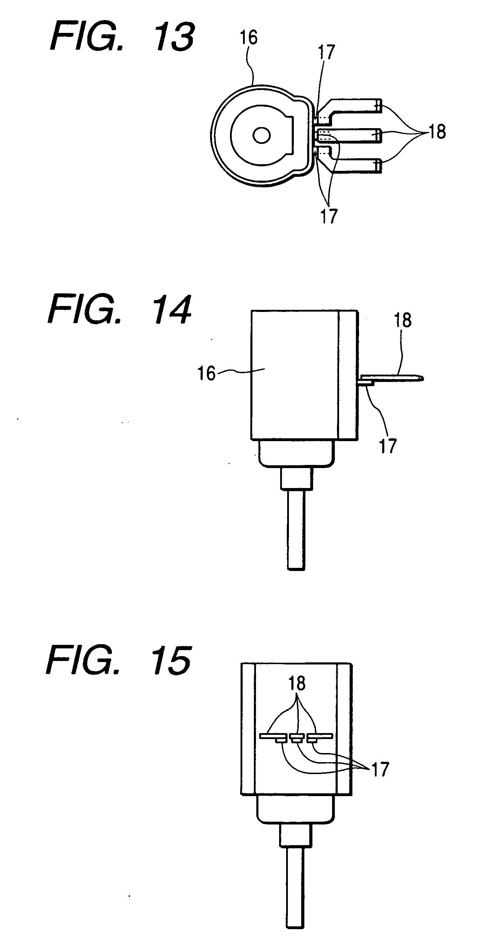

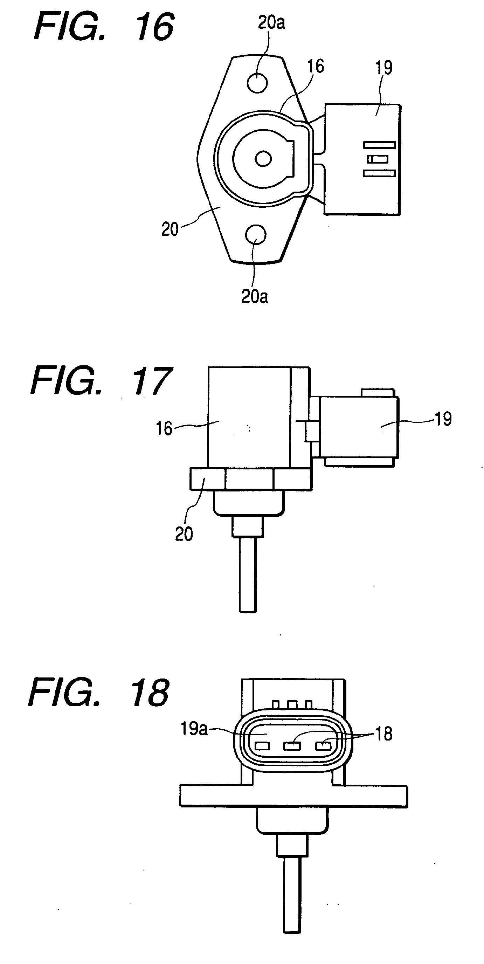

Next, of the drawings illustrating a modified version of the manufacturing method for the electrical part, which is the first preferred embodiment of the invention, Fig. 13 shows a plan of the step before formation in this modified version of the manufacturing process; Fig. 14; shows a front view of the step before formation in this modified version; Fig. 15, a profile of the step before formation in this modified version; Fig. 16, a plan of the step after formation in this modified version; Fig. 17, a front view of the step after formation in this modified version; and Fig. 18, a profile of the step before formation in this modified version.

As shown in Fig. 13 through Fig. 15, terminals 17 are exposed from the electrical part casing 16, and other terminals 18 are fitted to the exposed terminals 17 by welding or soldering. In this case, the other terminals 18 may be either separately fitted or units of three terminals each may be once fitted and the individual terminals being cut apart after the fitting.

As shown in Fig. 16 through Fig. 18, the connector housing 19 and a rhombic fitting portion 20 having fitting holes 20a are simultaneously fitted to those other terminals 18 and the electrical part casing 16 by insert-molding. The terminals 18 are exposed and arranged in the recess 19a of the connector housing 19 to function as connector terminals. Thus it is not that the terminals 18 are connected after the connector housing is fitted by insert-molding, but that only the terminals 18 are first fitted to the terminals 17, followed by insert-molding of the connector housing 19 and the fitting portion 20. This completes the modified version of the manufacturing method for the electrical part, which is the first embodiment of the present invention.

Although only the terminals 18 are first connected to the terminals 17, followed by the insert-molding of the connector housing 19 and the fitting portion 20, according to the above-described modified version, the invention is not limited to this sequence and it is also acceptable to connect only the terminals 17 to the terminals 18 after the terminals 18 are fitted to the connector housing 19 by insert-molding, followed by the fitting of the electrical part casing 16 and the fitting portion 20 by insert-molding.

Although the connecting portions between the terminals 17 and the terminals 18 are embedded in the resin after the insert-molding of the connector housing 19 and the fitting portion 20 in this modified version, the invention is not limited to this configuration and the connecting portions may be in an exposed state after the molding.

Though the brush 4a and the resistance substrate 5a constitute the detecting unit in the preferred embodiments of the invention described above, the invention is not limited to this arrangement and the detecting unit may as well consist of a magnet and a magnetoelectric transducer.

While the electrical part casing 1 is provided with the hole 1c to let the drive shaft 3 be pressed in and the aperture 1b is blocked by the lid 2 in the preferred embodiments of the invention described above, the invention is not limited to this arrangement, and instead of providing the hole 1c in the electrical part casing 1, the lid 2 may be provided with the hole 1c to let the drive shaft 3 be pressed in. In that case, the assembling sequence will have to be slightly changed as the drive shaft 3 would be pressed through the lid 2 at the last step to block the lid 2.

As hitherto described, the electrical part according to the invention is provided with an electrical part casing whose inside is blocked; electrical part terminals of which one end is exposed on the outer surface of the electrical part casing and insert-molded into the electrical part casing; a drive shaft of which one end protrudes outwards and the other end is positioned in the electrical part casing; a detecting unit housed in the electrical part casing and issuing a signal according to the quantity of action of the drive shaft; a connector housing formed separately from the electrical part casing; and connector terminals which are insert-molded into the connector housing and one end of which is exposed outside the connector housing, wherein the one end of the electrical part terminals and the one end of the connector terminals are connected to each other.

Since the electrical part terminals and the connector terminals are exposed in this configuration, an efficient manufacturing method can be adopted such as hoop molding by use of these exposed portions or the use of terminal units in each of which a plurality of terminals are continuous in the widthwise direction. It is also made possible to easily produce the connector housing or the connector terminals as demanded.

The electrical part according to the invention may as well be provided with an electrical part casing whose inside is blocked; electrical part terminals of which one end is exposed on the outer surface of the electrical part casing and insert-molded into the electrical part casing; a drive shaft of which one end protrudes outwards and the other end is positioned in the electrical part casing; a detecting unit housed in the electrical part casing and issuing a signal according to the quantity of action of the drive shaft; and a connector housing formed separately from the electrical part casing, wherein the one end of the electrical part terminals is extended in a state of being exposed into the connector housing, which is opposite thereto, penetrates the connector housing and is positioned in a recess of the connector housing to be insert-molded to serve as connector terminals.

This configuration permits the adoption of an efficient manufacturing method such as hoop molding by use of these exposed portions of the electrical part terminals and the connector terminals or use of terminal units in each of which a plurality of terminals are continuous in the widthwise direction. It is also made possible to easily produce the connector housing or the connector terminals as demanded.

An electrical part manufacturing method according to the invention comprises:
a step, using a unit in which a plurality of terminals are linked continuously in the widthwise direction, of simultaneously insert-molding a plurality of electrical part terminals so as to expose one end of the terminals in an accommodating recess of an electrical part casing and to expose the other end on the outer surface of the electrical part casing, and cutting apart the plurality of electrical part terminals linked continuously in the widthwise direction;
a step, using a unit in which a plurality of terminals are linked continuously in the widthwise direction, of simultaneously insert-molding a plurality of connector terminals so as to accommodate one end thereof in a recess which a connector housing has and to expose the other end on the outer surface of the connector housing, and cutting apart the plurality of connector terminals linked continuously in the widthwise direction;
a step of electrically connecting the other end of the plurality of electrical part terminals and the other end of the plurality of connector terminals;
a step of accommodating a detecting unit in the accommodating recess of the electrical part casing; and
a step of holding a drive shaft so as to let one end thereof protrude outwards and positioning the other end within the electrical part casing.

Since this method permits a manufacturing process by which a hoop or a terminal unit is used to mold a plurality of terminals at the same time, electrical parts can be efficiently manufactured thereby. It is also made possible to easily produce the connector housing or the connector terminals as demanded.

## Claims

1. An electrical part provided with an electrical part casing whose inside is blocked; electrical part terminals (6) of which one end is exposed on an outer surface of the electrical part casing (1) and insert-molded into the electrical part casing (1); a drive shaft (3) of which one end protrudes outwards and another end is positioned in the electrical part casing (1); a detecting unit (4, 5) housed in the electrical part casing (1) and issuing a signal according to a quantity of action of the drive shaft (3); **characterized by** a connector housing (8) formed separately from the electrical part casing (1); and connector terminals (9) which are insert-molded into the connector housing (8) and one end of which is exposed outside the connector housing (8), wherein the one end of the electrical part terminals (6) and the one end of the connector terminals (9) are connected to each other.

2. The electrical part according to Claim 1, further provided with a covering to cover a connecting portion between the one end of the electrical part terminals and the one end of the connector terminals.

3. The electrical part according to Claim 2, wherein a fitting member (11) is held by at least one of the electrical part casing (1) and the connector housing (8), and wherein a portion of the fitting member is used as the covering.

4. The electrical part according to Claim 3, wherein a power feed terminal is held by the connector housing (8), and wherein the exposed portion of the power feed terminal is partly held by the fitting member.

5. An electrical part provided with an electrical part casing (1) whose inside is blocked; electrical part terminals (12) of which one end is exposed on an outer surface of the electrical part casing (1) and insert-molded into the electrical part casing (1); a drive shaft (3) of which one end protrudes outwards and another end is positioned in the electrical part casing (1); a detecting unit (4, 5) housed in the electrical part casing (1) and issuing a signal according to a quantity of action of the drive shaft (3); **characterized by** a connector housing (8) formed separately from the electrical part casing (1), wherein the one end of the electrical part terminals (12) is extended in a state of being exposed into the connector housing (1), which is opposite thereto, penetrates the connector housing (8) and is positioned in a recess of the connector housing (1) to be insert-molded to serve as connector terminals (12).

6. A method of manufacturing an electrical part according to any of claims 1 to 5, comprising:
a step, using a unit in which a plurality of terminals are linked continuously in a widthwise direction, of simultaneously insert-molding a plurality of electrical part terminals so as to expose one end of the terminals in an accommodating recess of an electrical part casing and to expose another end on an outer surface of the electrical part casing, and cutting apart the plurality of electrical part terminals linked continuously in the widthwise direction;
a step, using a unit in which a plurality of terminals are linked continuously in a widthwise direction, of simultaneously insert-molding a plurality of connector terminals so as to accommodate one end thereof in a recess which a connector housing has and to expose an other end on an outer surface of the connector housing, and cutting apart the plurality of connector terminals linked continuously in the widthwise direction;
a step of electrically connecting the other end of the plurality of electrical part terminals and the other end of the plurality of connector terminals;
a step of accommodating a detecting unit in the accommodating recess of the electrical part casing; and
a step of holding a drive shaft so as to let one end thereof protrude outwards and positioning an other end within the electrical part casing.

## Patentansprüche

1. Elektrisches Teil, aufweisend:
ein Gehäuse des elektrischen Teils, dessen Innenraum abgeschlossen ist; Anschlüsse (6) des elektrischen Teils, von denen das eine Ende an einer äußeren Oberfläche des Gehäuses (1) des elektrischen Teils freiliegt und die durch Einsatz-Formen in dem Gehäuse (1) des elektrischen Teils angebracht sind;
eine Antriebsstange (3), von der das eine Ende nach außen herausragt und deren anderes Ende in dem Gehäuse (1) des elektrischen Teils positioniert ist;
eine Detektionseinheit (4, 5), die in dem Gehäuse (1) des elektrischen Teils untergebracht ist und ein Signal in Abhängigkeit von einem Wirkungsbetrag der Antriebsstange (3) abgibt;
**gekennzeichnet durch** ein Verbindergehäuse (8), das separat von dem Gehäuse (1) des elektrischen Teils ausgebildet ist, sowie **durch** Verbinderanschlüsse (9), die **durch** Einsatz-Formen in dem Verbindergehäuse (8) angebracht sind und von denen das eine Ende an der Außenseite des Verbindergehäuses (8) freiliegt, wobei das eine Ende der Anschlüsse (6) des elektrischen Teils sowie das eine Ende der Verbinderanschlüsse (9) miteinander verbunden sind.

2. Elektrisches Teil nach Anspruch 1,
weiterhin mit einer Abdeckung zum Überdecken eines Verbindungsbereichs zwischen dem einen Ende der Anschlüsse des elektrischen Teils und dem einen Ende der Verbinderanschlüsse.

3. Elektrisches Teil nach Anspruch 2,
wobei ein Passelement (11) von dem Gehäuse (1) des elektrischen Teils und/oder dem Verbindergehäuse (8) gehalten ist und wobei ein Bereich des Passelements als Abdeckung verwendet wird.

4. Elektrisches Teil nach Anspruch 3,
wobei ein Stromversorgungsanschluss von dem Verbindergehäuse (8) gehalten ist und wobei der freiliegende Bereich des Stromversorgungsanschlusses teilweise von dem Passelement gehalten ist.

5. Elektrisches Teil, aufweisend:
ein Gehäuse (1) des elektrischen Teils, dessen Innenraum abgeschlossen ist;
Anschlüsse (12) des elektrischen Teils, von denen das eine Ende an einer äußeren Oberfläche des Gehäuses (1) des elektrischen Teils freiliegt und die durch Einsatz-Formen in dem Gehäuse (1) des elektrischen Teils angebracht sind;
eine Antriebsstange (3), von der das eine Ende nach außen herausragt und das andere Ende in dem Gehäuse (1) des elektrischen Teils positioniert ist;
eine Detektionseinheit (4, 5), die in dem Gehäuse (1) des elektrischen Teils untergebracht ist und ein Signal in Abhängigkeit von einem Wirkungsbetrag der Antriebsstange (3) abgibt,
**gekennzeichnet durch** ein Verbindergehäuse (8) das separat von dem Gehäuse (1) des elektrischen Teils ausgebildet ist, wobei das eine, gegenüberliegende Ende der Anschlüsse (12) des elektrischen Teils sich in einem Zustand fortsetzt, in dem es in dem Verbindergehäuse (8) freiliegt, wobei es das Verbindergehäuse (8) durchsetzt und in einer Aussparung des **durch** Einsatz-Formen zubildenden Verbindergehäuses (1) positioniert ist, so dass diese Anschlüsse als Verbinderanschlüsse (12) dienen.

6. Verfahren zum Herstellen eines elektrischen Teils nach einem der Ansprüche 1 bis 5, wobei das Verfahren folgende Schritte aufweist:
Unter Verwendung einer Einheit, bei der eine Mehrzahl von Anschlüssen in Breitenrichtung kontinuierlich verbunden ist, erfolgendes gleichzeitiges Einsatz-Formen einer Mehrzahl von Anschlüssen des elektrischen Teils in einer derartigen Weise, dass das eine Ende der Anschlüsse in einer Aufnahmeaussparung eines Gehäuses des elektrischen Teils freiliegt und das andere Ende an der äußeren Oberfläche des Gehäuses des elektrischen Teils freiliegt, sowie Auseinanderschneiden der Mehrzahl der Anschlüsse des elektrischen Teils, die in kontinuierlicher Weise in Breitenrichtung verbunden sind;
unter Verwendung einer Einheit, bei der eine Mehrzahl von Anschlüssen in Breitenrichtung in kontinuierlicher Weise verbunden ist, erfolgendes gleichzeitiges Einsatz-Formen einer Mehrzahl von Verbinderanschlüssen in einer derartigen Weise, dass das eine Ende von diesen in einer Aussparung in einem Verbindergehäuse aufgenommen ist und das andere Ende an der äußeren Oberfläche des Verbindergehäuses freiliegt, sowie Auseinanderschneiden der Mehrzahl der Verbinderanschlüsse, die in kontinuierlicher Weise in Breitenrichtung miteinander verbunden sind;
elektrisches Verbinden des anderen Endes der Mehrzahl der Anschlüsse des elektrischen Teils sowie des anderen Endes der Mehrzahl der Verbinderanschlüsse;
Unterbringen einer Detektionseinheit in der Aufnahmeaussparung des Gehäuses des elektrischen Teils; und
Halten einer Antriebsstange in einer derartigen Weise, dass das eine Ende von dieser nach außen herausragt und das andere Ende innerhalb des Gehäuses des elektrischen Teils positioniert ist.

## Revendications

1. Composant électrique comprenant un boîtier de composant électrique dont l'intérieur est bloqué; des bornes de composant électrique (6) dont une première extrémité est exposée sur une surface extérieure du boîtier de composant électrique (1) et qui sont moulées en insert dans le boîtier de composant électrique (1); un arbre de commande (3) dont une extrémité fait saillie à l'extérieur et une autre extrémité est positionnée dans le boîtier de composant électrique (1); une unité de détection (4, 5) logée dans le boîtier de composant électrique (1) et émettant un signal en fonction d'une quantité d'action de l'arbre de commande (3); **caractérisé par** un logement de connecteur (8) formé séparément du boîtier de composant électrique (1); et des bornes de connecteur (9) qui sont moulées en insert dans le logement de connecteur (8) et dont une première extrémité est exposée à l'extérieur du logement de connecteur (8), dans lequel la première extrémité des bornes de composant électrique (6) et la première extrémité des bornes de connecteur (9) sont connectées l'une à l'autre.

2. Composant électrique selon la revendication 1, comprenant en outre une enveloppe pour couvrir une partie de connexion entre la première extrémité des bornes de composant électrique et la première extrémité des bornes de connecteur.

3. Composant électrique selon la revendication 2, dans lequel un organe d'assemblage (11) est tenu par au moins un élément parmi le boîtier de composant électrique (11) et le logement de connecteur (8), et dans lequel une partie de l'organe d'assemblage est utilisée comme enveloppe.

4. Composant électrique selon la revendication 3, dans lequel une borne d'alimentation électrique est tenue par le logement de connecteur (8), et dans lequel la partie exposée de la borne d'alimentation est partiellement tenue par l'organe d'assemblage.

5. Composant électrique comprenant un boîtier de composant électrique (1) dont l'intérieur est bloqué; des bornes de composant électrique (12) dont une première extrémité est exposée sur une surface extérieure du boîtier de composant électrique (1) et qui sont moulées en insert dans le boîtier de composant électrique (1); un arbre de commande (3) dont une extrémité fait saillie à l'extérieur et une autre extrémité est positionnée dans le boîtier de composant électrique (1); une unité de détection (4, 5) logée dans le boîtier de composant électrique (1) et émettant un signal en fonction d'une quantité d'action de l'arbre de commande (3); **caractérisé par** un logement de connecteur (8) formé séparément du boîtier de composant électrique (1), dans lequel la première extrémité des bornes de composant électrique (12) s'étend dans une situation d'exposition dans le logement de connecteur (8), qui lui fait face, pénètre dans le logement de connecteur (8) et est positionnée dans un évidement du logement de connecteur (8) pour être moulées en insert afin de servir de bornes de connecteur (12).

6. Procédé de fabrication d'un composant électrique selon l'une quelconque des revendications 1 à 5, comprenant:
une étape, utilisant une unité dans laquelle une pluralité bornes sont liées de façon continue dans une direction latérale, consistant à mouler en insert simultanément une pluralité de bornes de composant électrique afin d'exposer une première extrémité des bornes dans un évidement récepteur d'un boîtier de composant électrique et d'exposer une autre extrémité sur une surface extérieure du boîtier de composant électrique, et à couper pour séparer l'une de l'autre les bornes de composant électrique liées de façon continue dans la direction latérale;
une étape, utilisant une unité dans laquelle une pluralité de bornes sont liées de façon continue dans une direction latérale, consistant à mouler en insert simultanément une pluralité de bornes de connecteur afin de loger leur première extrémité dans un évidement que comporte un logement de connecteur et d'exposer leur autre extrémité sur une surface extérieure du logement de connecteur, et à couper pour séparer l'une de l'autre les bornes de connecteur liées de façon continue dans la direction latérale;
une étape consistant à connecter électriquement l'autre extrémité de la pluralité de bornes de composant électrique et l'autre extrémité de la pluralité de bornes de connecteur;
une étape consistant à installer une unité de détection dans l'évidement récepteur du boîtier de composant électrique; et
une étape consistant à tenir un arbre de commande pour laisser sa première extrémité faire saillie à l'extérieur et positionner son autre extrémité à l'intérieur du boîtier de composant électrique.
